# EUROPEAN PATENT SPECIFICATION

(11) **EP 1 073 955 B1**
(45) Date of publication and mention of the grant of the patent: **16.04.2008**
(21) Application number: 99911050.5
(22) Date of filing: 03.03.1999
(51) Int. Cl.: G06F 9/445

(54) **METHOD, SYSTEM, APPARATUS AND PROGRAM PRODUCT FOR DISTRIBUTION AND INSTANTIATION OF SOFTWARE UPGRADES**
VERFAHREN, SYSTEM, GERÄT UND PROGRAMM ZUR VERTEILUNG UND EINFÜHRUNG VON SOFTWARE-UPGRADE
PROCEDE, SYSTEME, APPAREIL, ET PRODUIT PROGRAMME POUR REPARTIR ET INSTANCIER DES MISES A JOUR DE LOGICIELS

(30) Priority: 03.03.1998 US 76667 P
(43) Date of publication of application: 07.02.2001
(73) Proprietor: Siebel Systems, Inc., San Mateo, CA 94402 (US)
(72) Inventor: ARNAIZ, Gilberto, Redwood City, CA 94065 (US); BRODERSEN, Robert, A., Redwood City, CA 94065 (US); CHATTERJEE, Prashant, Saratoga, CA 95070 (US); LIM, Peter, S., Redwood City, CA 94065 (US); WANDLESS, Duane, Redwood City, CA 94062 (US)
(74) Representative: Abnett, Richard Charles
(86) International application number: PCT/US1999/004581
(87) International publication number: WO 1999/045465

(56) References cited:
- EP-A- 0 802 480
- EP-A- 0 811 942
- EP-A2- 0 811 942
- US-A- 5 155 847
- US-A- 5 473 772
- US-A- 5 586 304
- US-A- 5 666 501
- US-A- 5 684 952
- US-A- 5 715 462
- ANONYMOUS: "LOGGING STATUS INFORMATION WHILE INSTALLING NEW SOFTWARE" IBM TECHNICAL DISCLOSURE BULLETIN, IBM CORP. NEW YORK, US, vol. 34, no. 1, June 1991 (1991-06), page 177, XP000210175 ISSN: 0018-8689
- "SIEBEL ANNOUNCES PRODUCTION SHIPMENT OF SIEBEL ENTERPRISE APPLICATIONS VERSION 3.0" DAILOG IAC NEWSLETTE, February 1997 (1997-02), XP002932086
- M2 COMMUNICATIONS, SIEBEL ANNOUNCES PRODUCTION SHIPMENT OF SIEBEL ENTERPRISE APPLICATIONS VERSION 3.0, M2 PRESSWIRE, 28 February 1997, page 2, XP002932086

## Description

### FIELD OF THE INVENTION

This invention relates to a system and method for providing software updates online. The updates may be provided to one or more of a sequence of individual computers, or to a network of computers. In a preferred exemplification, the software updates are provided to individual clients in a client server-network, for example a client-server network of the type executing a partially replicated relational database or transaction processing system in an enterprise on a WAN or a LAN.

### BACKGROUND OF THE INVENTION

Business enterprises utilize large numbers of terminals, i.e., desktop computers, portable computers, and network terminals, to carry out their activities. While it is desirable that all of these terminals have identical images, interfaces, and software, this is not always possible when a continuum of terminal ages and capabilities exists in an enterprise. However, it is absolutely essential that the set of terminals in an enterprise be able to communicate effectively. This requires careful planning for and coordination of software migration efforts.

In a system including one or more central databases (including correspondence databases and such databases as are contemplated in groupware applications such as Lotus Notes, Novell GroupWise, and the like) and locally partially replicated databases, there is a considerable amount of software which is often customized to meet the needs of a particular enterprise, and even particular users and groups of users within elements of the enterprise. A great deal of effort is expended on configuring the software and writing custom modules and objects. If the software is upgraded to a new release, a considerable amount of programming time and effort are required to provide consistent upgrades while configuring the new release and reimplementing the customer-specific functionality of the earlier versions.

We have appreciated that it would be desirable to provide a capability to provide a facility which allows enterprises to rapidly migrate their changes from one version of the software to another version of the software, such as configurations and objects.

We have also appreciated that it would be desirable to accomplish rapid migration of software upgrades in a user-friendly, on-line method through the use of on-line distribution of software upgrades.

European Patent Application No. 811942 describes a service provider computer system that stores a list of software updates that are available from third-party vendors, so that a client application executing on a client computer can be directed to the appropriate third-party vendor computer to obtain a desired software upgrade. According to this document, a client application executes an 'install monitor' prior to actually installing the software update, and the install monitor records the changes made to the client computer as a result of the software update in order to allow the user to 'undo' or remove the software update installation in response to an explicit command from the user to do so, after installation has been successfully completed. The install monitor documents the state of the client computer prior to installation and the changes made during the installation of the software update to allow a recovery module to use the information to restore the configuration of the client computer. The recovery is an action initiated by the user when he or she is dissatisfied with a software update, and the recovery module provides for undoing or de-installing a previously installed software update. Thus, the install monitor and the recovery module, which are distinct from the application program that is performing the application program update, work in conjunction to recover the client computer by uninstalling a previously properly installed application program update.

United States Patent 5,473,772 describes a file updating system. If there is a failure in file updating the application determines what action (unspecified) is to be taken. United States Patent 5,715,462 describes a file updating system for use with two operating systems.

### SUMMARY OF THE INVENTION

The invention is defined in the independent claims below, to which reference may now be made. Advantageous features are set forth in the dependent claims.

A preferred embodiment of the invention is described in detail below with reference to the drawings. This embodiment provides software version upgrades and database schema synchronization. The software provider or upgrader, e.g., the database administrator, applies and distributes database schema changes to all remote databases including mobile databases and regional databases. Moreover, the software provider or upgrader applies minor schema changes (e.g. database extensions), patches, and major schema changes without manual intervention.

In this preferred embodiment, it is possible to provide software version upgrade for all types of installations. That is, the software provider or the upgrader, e.g., the database administrator, is now able to upgrade all types of installations and terminals, including connected clients, remote clients, regional servers, and application servers.

One aspect of our system is a method of distributing and instantiating software version upgrades in a distributed computing environment. The preferred method includes setting the minimum (and maximum) levels of the version for installed software, and using those levels to define the contents of software version upgrade kits. The contents of the software version upgrade kits are then written to a database, e.g., as a table of contents or the like, and used to generate software version upgrade kit tables. These tables are used to build software version upgrade kits. Copies of the upgrade kits are downloaded to clients to be upgraded, and the software on the client is upgraded.

After the table of contents of the software upgrade kits is installed, it is compared to the locally installed software on a client, with the software needing to be installed on the client being downloaded to the client. This comparison can be at the startup of the server, the client, or a particular software component.

When the client is a mobile client, the comparison and download are carried out at a docking session, with instantiation of the upgrade either during the current docking session or during a subsequent docking session.

In one exemplification of our invention the distributed computing environment is a database management system having replicated or partially replicated databases, and the database schema version on the client is compared to the database schema version on the server, with reinitialization of the database version on the client if the database schema version on the client and the server do not match, and synchronization of the database on the client with the database on the server if the database schema versions on the client and server do match.

In the described embodiment there is support for third party software. The software provider or upgrader, e.g., the database administrator, is able to upgrade third party software that customer installations depend on. For example, the software provider, management information services supervisor, or upgrader, e.g., the database administrator, is able to upgrade Microsoft Word, Adobe Acrobat, Microsoft Access (Registered Trade Marks) and the like residing on customer installations.

Full and partial upgrades are enabled. The upgrader, e.g., the database administrator, may upgrade all or part of an installation. For example, the upgrader is able to distribute both a completely new installation and a patch for an existing installation such as a CDF file, an executable, a DLL, a report, and the like. In a like manner, the upgrader is able to distribute upgrades for different languages.

These features are achieved while maintaining ease of use and user friendliness. In this regard, ease of use requires automatic detection of existing programs and automatic invocation of upgrade programs, including clients and replication agents. The installation software must automatically detect when an upgrade is available and can be applied to the local installation, such that the user does not need to explicitly find and choose upgrades. User-friendliness requires that software upgrade programs must let the user cancel or defer upgrades. The software upgrade programs must keep the user informed on the status of upgrades, and inform the user of pending upgrades, the user steps to be performed in an upgrade, time estimates for the upgrade, and progress indicators during the upgrades. This includes self upgrading - upgrades must be able to upgrade themselves, and the upgrader, e.g., the database administrator, must be able to distribute upgrades for the upgrade programs. User-friendliness also includes a requirement for adaptivity, that is, the ability for individual users to use any method to install or update software components, whether using an upgrade wizard or not. Upgrades should use the current state of the software components to identify whether an upgrade is needed.

A related requirement is restartability. That means that the upgrade software must track the progress of upgrades and automatically roll back changes when an error occurs, and the upgrade software must also be able to restart the upgrade from the last save point.

A desirable property is the availability of early downloads. By this expedient, mobile users can download and apply upgrade kits to their local machines even before the upgrade is required. This lets mobile users download the upgrade when they have more time or have access to a fast network, e.g. visiting HQ (headquarters).

A further desirable property is centralized definition and monitoring; the upgrader, e.g., the database administrator, must be able to easily define and distribute software and schema upgrades from a central location. Moreover, the upgrader must be able to monitor the progress of upgrades across all installations. For example, the upgrader must be able to find all installations that have applied an upgrade. This includes guaranteed delivery. All upgrades are distributed and applied to all installations. The upgrader must not have to explicitly monitor the status of upgrades on every installation.

The preferred embodiment provides support for Test and Production environments; the upgrader, e.g., the database administrator, must be able to configure and test upgrades in a test environment, and, thereafter, easily migrate the changes to a production environment for distribution to all production users.

The upgrades are able to stand alone, i.e. are self-contained. This means that upgrades are able to run by themselves, and do not depend on other programs or data.

Installation of upgrades requires minimal network traffic. It is important to minimize file transfers by sending upgrades to only the sites that need them. For example, application server upgrades are only sent to regional data installations, and Microsoft Word upgrades are only sent to client installations.

### BRIEF DESCRIPTION OF THE DRAWINGS

The invention will now be described in more detail, by way of example, with reference to the drawings, in which:
**FIGURE 1** illustrates the process of defining software upgrades.
**FIGURE 2** illustrates the initiation and distribution of upgrades.
**FIGURE 3** illustrates the upgrade procedures for customers.
**FIGURE 4** is a data model for a remote upgrade.
**FIGURE 5** is a table showing an enumeration of the valid actions for the upgrade kit items.

### DETAILED DESCRIPTION OF THE PREFERRED EMBODIMENT OF THE INVENTION

The definition of upgrades, the initiation and distribution of upgrades, and end-user level upgrading are illustrated in the FIGURES.

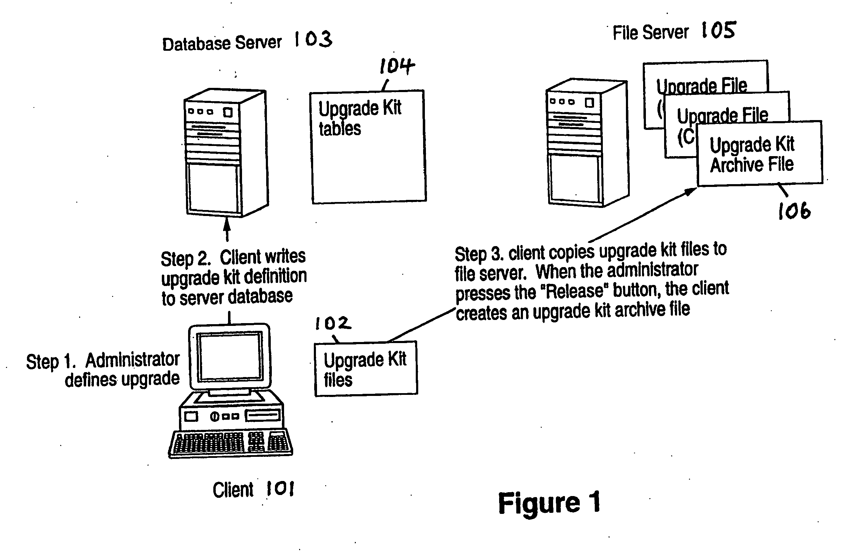

As shown in FIGURE 1, the administrator defines the upgrade kits, thereby generating upgrade kit files. Next, the client writes the upgrade kit definition to the server database resident in the database server, generating further upgrade kit files. The client also copies upgrade kit files to the file server. When the upgrade kit files are to be released, upgrade kit archive files are created.

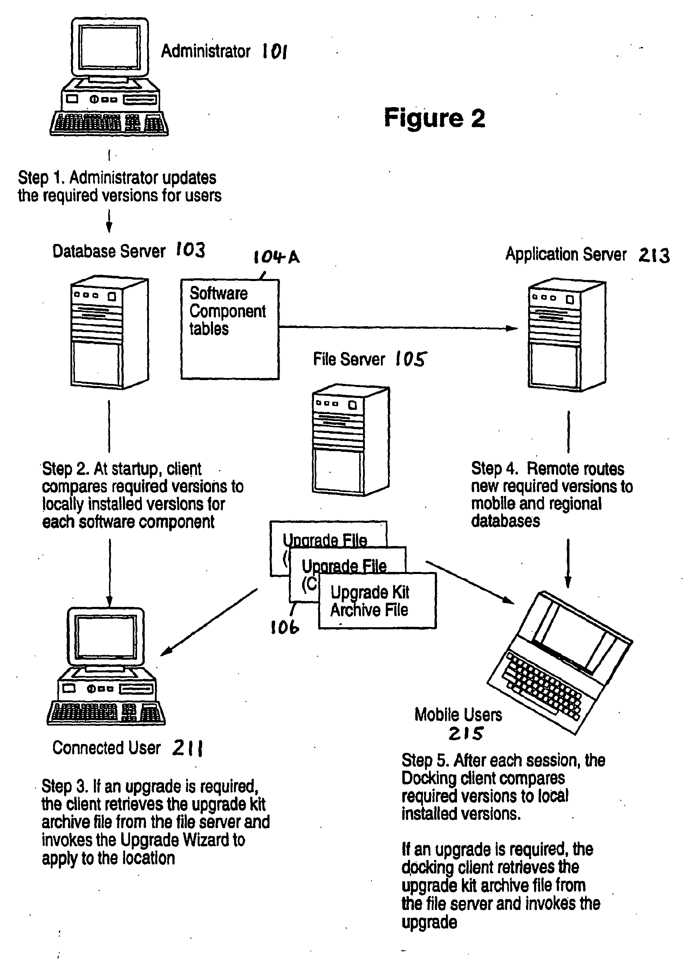

In the process shown in FIGURE 2 the administrator updates the required versions for a software item. This causes the client to compare the required versions of the software with the locally installed versions for each software item. If an upgrade is required, the client retrieves the upgrade kit archive file from the file server and invokes the upgrade wizard to apply the upgrade locally. Also shown in FIGURE 2 is upgrading of mobile users. In the case of mobile users an application server routes new required versions to mobile and regional users. After a docking session, the docking client compares the required versions to locally installed versions of the software. If an upgrade is required, the docking client retrieves the upgrade kit archive file from the file server and invokes the upgrade wizard to apply the upgrade to the local machine.

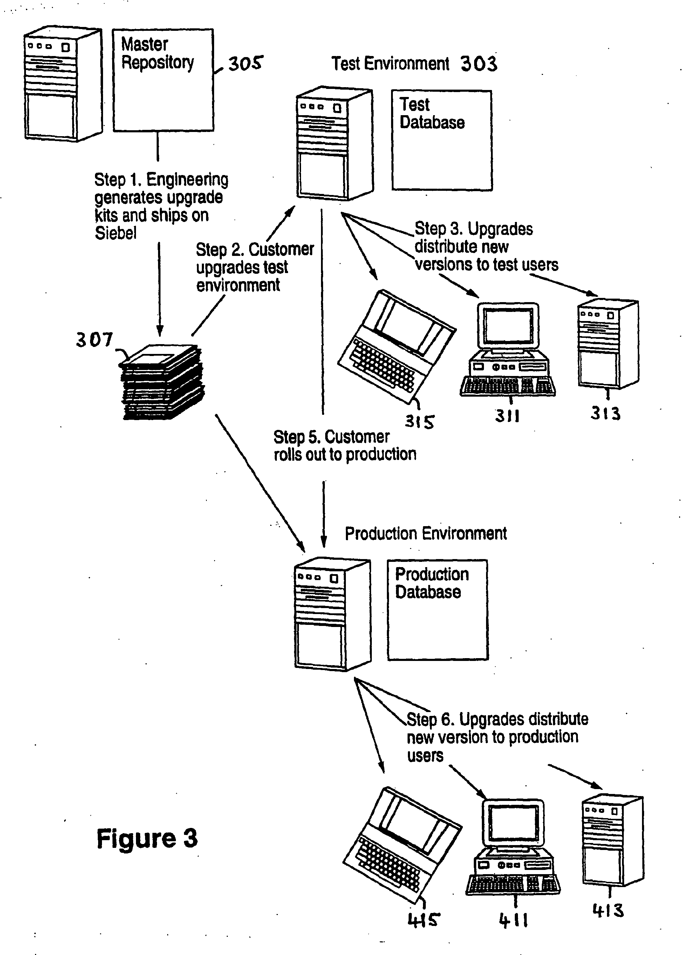

As shown in FIGURE 3 upgrade distribution CDs or diskettes are created and shipped to customers. The customer upgrades a test environment, distributes new version of the software testing, and tests the software. If the test is satisfactory, the customer upgrades the new version to production users.

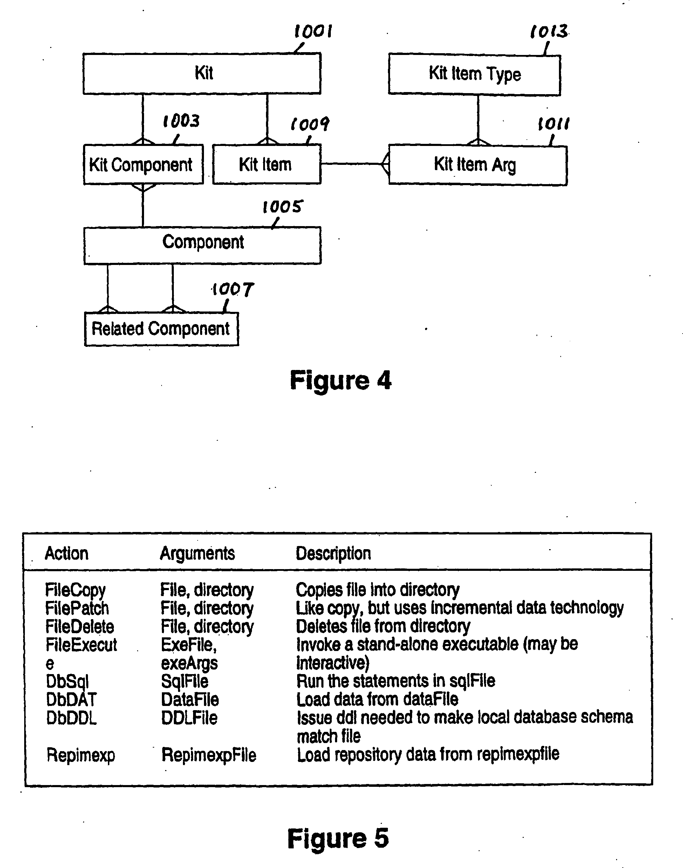

FIGURE 4 shows the upgrade kit, a kit component, including a component, and a related component, a kit item and kit item argument, and a kit item type argument.

FIGURE 5 shows an enumeration of the valid actions for the upgrade kit items, such as copying files into directories, deleting files from directories, invoking stand-alone executables, running statements in SQL files, loading data, issuing ddl, and loading repository files.

### Implementation Overview

The preferred embodiment of the invention described below provides on-line distribution of software upgrades while satisfying the following business requirements:

It provides database schema synchronization.

It provides support for all types of installations and terminals in an enterprise. That is, the software provider or the upgrader, e.g., the database administrator, must be able to upgrade all types of installations in an enterprise, including connected clients, remote clients, regional servers and application servers.

It provides support for the upgrading of third party software.

It supports both full and partial upgrades installed software in an enterprise.

An additional feature is restartability. This means that the upgrade software should track the progress of upgrades and automatically roll back changes when an error occurs, and the upgrade software should also be able to restart the upgrade from the last save point.

An important feature of the preferred embodiment of the invention, especially in an enterprise characterized by heterogeneity and/or geographical dispersion, is centralized definition and monitoring. The upgrader, e.g., the database administrator, must be able to easily define and distribute software and schema upgrades from a central location and to monitor the progress of upgrades across all installations.

The upgrade should be able to stand alone. This means that upgrades should be able to run by themselves, and not depend on other programs or data.

Finally, these advantageous features should be attained and maintained while preserving ease of use and user friendliness.

As shown in FIGURE 1, the administrator, shown as the client 101, defines the upgrade kits. The client 101 writes this upgrade kit definition to a server database 103 resident in the database server, generating upgrade kit tables 104 in the server database 103. The step of defining the upgrade at the client 101 also generates upgrade kit files 102. The client copies these upgrade kit files 102 to the file server 105, for example, for subsequent downloading. When the upgrade kit files are to be released, upgrade kit archive files 106 are created.

FIGURE 2 illustrates the initiation and distribution of upgrades. In the process shown FIGURE 2, the administrator 101 updates the required versions for a software item.

This causes the database server 103, with resident software component tables 104A, when started up, to compare the required versions of the software with the locally installed versions for each connected local user 211 for each software item. If an upgrade is required the local user 211 retrieves the upgrade kit archive file 106 from the file server 105 and invokes an upgrade wizard to apply the upgrade locally.

Also shown in FIGURE 2 is upgrading of mobile users 215. In the case of mobile users 21 an application server 213 routes new required versions to mobile 215 and regional users. After a docking session, the docking client compares the required versions to locally installed versions of the software. If an upgrade is required, the docking client retrieves the upgrade kit archive file 106 from the file server 105 and invokes the upgrade wizard to apply the upgrade to the local machine 215.

FIGURE 3 illustrates one set of test and distribution procedures for customers. As shown in FIGURE 3, upgrade CDs or diskettes 307 are created in a master repository 305 and shipped to a test database server 303 for distribution to test users, including server test users 313, connected test users 311, and mobile test users 315. The test users 311, 313, and 315 upgrade their test environments and the upgraded version of the software for testing. The customers 311, 313, 315 test the software. If the test is satisfactory, the newly upgraded version of the software is distributed to production users 411,413,415.

FIGURE 4 illustrates a data model for a remote upgrade. It shows the upgrade kit 1001, a kit component 1003, including a component 1005, and a related component 1007, a kit item 1009 and kit item argument 1011, and a kit item type 1013.

### Software Components

The basic unit of upgrades is the software component. A software component is a set of software that can be separately installed and tracked and desinstalled by upgrades. Each software component has a range of required versions. The software vendor, the MIS supervisor, or the upgrader, e.g., the database administrator, specifies the range of required for each software component. Examples of software components in, by way of exemplification only and not limitation, the Siebel Remote application are the Siebel Schema, the Siebel Client, the Siebel Server and Microsoft Word.

### Upgrade Kits

The software vendor, MIS supervisor, or upgrader, e.g., the database administrator, creates upgrade kits to install or upgrade one or more software components. An upgrade kit is a collection of files and actions to upgrade one or more software components from one version to another (usually higher) version. To initiate an upgrade of a software component, the upgrader builds and releases an upgrade kit to install the new version of the software component. Then the upgrader updates the software component's required versions to ensure that users upgrade to the new required version of the software component.

### Automatic Upgrade Detection

At certain pre-defined times (e.g. client startup, before and after each synchronization session, before invoking a third party software component, when the Server starts up), system programs verify that software components for the currently running program are up-to-date. For example, in the case of Siebel Remote, the Siebel Client checks the versions of the Siebel Schema and Siebel Client components, but does not necessarily check the Siebel Server component. The server determines the currently installed version of a software component by interrogating the software component itself and comparing the installed versions against the required versions.

If any software component is not within the range of required versions, the server checks the versions of all software components installed on the client and searches for one or more upgrade kits to upgrade the out-of-date software components to the required versions. The server then informs the user of the required upgrades and prompts the user to perform the upgrade.

### Upgrade wizard

The server invokes an upgrade wizard to apply an upgrade kit. After invoking the upgrade wizard, the program exits so as to release any locks on database tables or files that need to be upgraded. For example, the client invokes the upgrade wizard and exits. The Server sends a shutdown messages to all currently active server components, waits for all server components to stop, invokes the upgrade wizard and exits.

The upgrade wizard is preferably a standalone single executable (no DLLs required) that can read and apply an upgrade kit to the local machine. The upgrade wizard keeps track of the upgrade's progress and automatically recovers from errors. For example, it creates a back up of the local database and local files while applying an upgrade kit. If an error occurs anytime during the upgrade, the upgrade wizard attempts to rollback all the changes and restores the local machine to the original state.

When the Client or Server starts, it detects whether an upgrade is in progress or has failed. If so, it informs the user and invokes the upgrade wizard to restart the upgrade. For the Client, if the user declines to restart the upgrade, the Client continues in read-only mode. In read-only mode, the client lets the user view data but prevents the user from modifying data. For the Server, if the upgrader, e.g., the database administrator, declines to restart the upgrade, the Server issues an error message and stops.

After successfully completing an upgrade, the software components on the local machine should be up-to-date. The upgrade wizard restarts the original program that invoked the upgrade.

### Using Upgrades

This section describes the process for defining, distributing and applying an upgrade in more detail.

### Customize

The upgrader, e.g., the database administrator, uses tool programs and other programs to customize the database management system for their environment. The upgrader has the capability to extend the database schema and customize client screens, report files and other files.

### Define Upgrades

The Upgrader, e.g., the database administrator, defines the upgrade in the server database. This process consists of defining the software components and the upgrade kits needed to upgrade each software component to a specific version.

### Define Software Components

The upgrader, e.g., the database administrator, uses a Software Component screen or tool to define new software components. A software component is a set of software that can be separately installed and tracked and de-installed by upgrades. As used herein, a software component has the following attributes:
Name. A name to identify the software component
Required Versions. A range of versions, that is, the minimum and maximum versions, that must be installed on each machine.
Locate Method. A specification of how to detect whether the software component is installed on a machine. For example, read the windows registry to identify where Microsoft Windows (RTM) is installed on the local machine.
Version Method. A specification of how to identify the current version of installed software component on a machine. For example, read the Windows registry to get the currently installed version of Microsoft Word on the local machine.
"Compiled" component information. Information about the previously released version of the software component. For example Siebel Remote stores exactly two versions of software components. The user can view and manipulate the current version. Siebel Remote stores the previously released version in a LONG column in the software component table (i.e. S _UPG_COMP). The upgrader, e.g., the database administrator, uses the Component screen to copy the current version into the "compiled" LONG column.
Schema. The schema is the database schema, also referred to as a meta-database. This includes the database tables, indexes, views, seed data and repository data that must be installed in the database to run.
Client. The executables, dlls, reports, help files needed to run the client.
CDF. The definition of a customer's configuration for the client.
Server. The executables, dlls and other files needed to run the server.
Upgrade wizard. The standalone executable that applies upgrade kits on a machine.

For most end users, the predefined set of software components described above is complete. If needed, the upgrader, e.g., the database administrator, can also define one-off software components that they want to distribute and apply to their users.

### Define Upgrade Kits using the Upgrade Kit screen

In a preferred embodiment of our invention, the upgrader, e.g., the data administrator, uses an Upgrade Kit screen to define an upgrade kit to install one or more software components.

Each upgrade kit must contain all the files and commands needed to install the software components. For example, an upgrade kit can be used to install Microsoft Word 7.0.2 on all clients. This upgrade kit must contain all the files (e.g. executables, sample files, templates, etc.) and commands (e.g. update the registry, build short cuts, etc.) to install Microsoft Word 7.0.2. The upgrader, e.g., the database administrator, provides the following information when defining an upgrade kit:
Upgrade kit information. Provide a name, a title and a description of the upgrade kit.
   Upgrade kit items. The upgrader, e.g., the database administrator, defines a set of actions (or "items") that the upgrade wizard runs in sequence to apply the upgrade kit. The upgrader pre-creates the files for the upgrade kit and registers them with the upgrade kit.
   Required component versions. The upgrader, e.g., the database administrator, also defines the list of required software components that must be installed to apply the upgrade kit. For example, an upgrade kit to import data into the database might require that SQL Anywhere v5.5 be installed.
   Component versions to install. The upgrader, e.g., the database administrator also defines the list of software components that the upgrade kit applies. example, an upgrade kit to execute a file might install Microsoft Word 7.0.2.
   The Upgrade Kit screen provides a wizard to help creating upgrade kits at customer sites. The Upgrade Kit Wizard lets the upgrader, e.g., the database administrator, create upgrade kits for software components that users can customize.

After the upgrader, e.g., the database administrator, finishes defining an upgrade, he or she saves the result, for example, by issuing a command, for example, pressing the "Release" button on the Siebel Upgrade Kit screen, to make the upgrade kit available to all installations. The command, for example, the button, does the following:
Generates an upgrade wizard driver file for the upgrade kit.
Creates an upgrade kit archive file and stores it in the file system. The archive file consists of the upgrade wizard driver file and all the files needed to apply the upgrade kit to a machine.
Compiles the upgrade kit information into a "compiled" LONG column. This "compiled" column stores all the information needed by programs to find the upgrade kits. This "compiled" column is provided to reduce the time to find upgrade kits.

### Deploy Upgrades

After defining the upgrade, the upgrader, e.g., the database administrator, then initiates the upgrade from the server database. Client programs at all locations automatically detect and apply the upgrades as needed.

### Early Download of Upgrade Kits

After the upgrade kit is defined, it is possible to distribute the upgrade kit definitions and associated files to mobile and regional databases. In this case mobile users can navigate to the Upgrade Kit screen and request that the database management system download the upgrade kit archive file in the next synchronization session. This lets mobile users download large upgrade kit archive files long before the upgrade kit needs to be applied to the local machine. For example, the mobile user may be visiting headquarters and can download the upgrade kit archive file in much less time over the LAN than over a modem.

Early download of upgrade kits is not mandatory for mobile users. The mobile user does not need to explicitly request the upgrade kit archive file. The database management software can automatically download the upgrade kit archive file if it needs to apply the upgrade kit and the upgrade kit archive file is not accessible on the local machine.

### Initiate Upgrades

After defining software components and upgrade kits, the upgrader, e.g., the database administrator, can initiate an upgrade of the software component. The upgrader must first set the required versions of the software component. There are two ways of setting the required versions: the first way is through the component screen. The upgrader uses the component screen to manually update the required versions for a software component. He or she uses the screen to modify the minimum or maximum required version of one or more software components.

Alternatively, the upgrader, e.g., the database administrator, can utilize an Upgrade Kit screen. The upgrader uses the Upgrade Kit screen to update the required versions of a software component. The upgrader selects an upgrade kit, and initiates a function to set the required versions, for example, in the case of Siebel Remote, the upgrader presses the "Set Required Versions" button. The button finds all the software components that the upgrade affects and sets their maximum versions. The maximum versions are set to the versions that the upgrade kit installs.

The upgrader, e.g., the database administrator, uses a component or similar screen to "release" the new software component information to all users. The upgrader selects a software component and presses the "Release" button. The button reads all the information about the selected software component and related software components, verifies the information, writes the information to the "compiled" LONG column and logs a transaction to replicate the information to all databases.

### Detect and Apply Upgrade Kits

Upgrade programs embodying our invention automatically detect an upgrade by comparing the currently installed version of each component to the required versions. The client reads the required versions from the software component "compiled" LONG column at start up. Servers also read the required versions from the software component "compiled" LONG column at start up.

For mobile users and regional databases, the upgrader, e.g., the database administrator, distributes the updated required versions to all remote databases. The docking client and Replication Agent query the docking server for the required schema versions before each synchronization session. If a change to the software component compiled column occurs during a synchronization session, the docking client and Replication Agent reads the required versions after the synchronization session.

If any of the versions do not match, then an upgrade is required and the program searches for one or more upgrade kits to apply, applies the upgrade kits in two steps:
Download the upgrade kit archive file to the local machine.
Invoke the upgrade wizard to apply the upgrade kit to the local machine.

For mobile and regional database installations, the docking client downloads the upgrade kit archive file from the server, typically the database server, to the local inbox directory. For connected users, the client downloads the upgrade kit archive file in the file system to the temp directory on the local disk.

After the upgrade kit is accessible on the local machine, the upgrade wizard applies the upgrade. The upgrade wizard extracts files from the upgrade kit archive file, then performs each of the upgrade kit actions in sequence. If an error occurs, the upgrade wizard rolls back the upgrade kit actions and displays an error to the user. The program detects and invokes upgrades again the next time.

After successfully completing all the upgrade kit actions, the upgrade wizard deletes the upgrade kit files from the local machine and restarts the program that invoked the upgrade.

### Integration

The upgrade installation system uses a package, for example, Siebel Upgrades, to initialize and maintain remote databases. The upgrade wizard initializes new remote - databases, performs database re-extracts, and handles database schema upgrades.

Extract Remote Databases - When extracting a remote database, Database Extract creates an upgrade kit archive file in the outbox directory. This database extract archive file consists of an upgrade wizard driver file and several items to initialize the local database:
Create database. Copy the database template file (for mobile users)
Snapshot data. Import a database snapshot file containing visible data for the mobile user
Sql files. Execute a set of SQL files that create users and initialize data in the database.

### Database Initialization

The client, Replication Agent, docking client and standalone Dbinit (database initialization) program invoke Dbinit to initialize a local database. Database initialization (Dbinit) ensures that all required versions exist on the local machine and creates a local database for the mobile client.

### Dbinit performs these steps:

Connect to Server. Dbinit prompts the user for the name of the local mobile client, the password for the mobile client and the address of the Remote Server (the mobile user should get this information from his or her upgrader, e.g., the MIS staff, the vendor, or the database administraton). Database initialization connects to the Remote server and validates the mobile client name, user and password.
Perform version check and download upgrade kits. Dbinit then performs a version check to ensure that all required software components exist on the local machine. Dbinit first downloads the required versions (i.e. the compiled information) from the docking server. Dbinit compares the required versions against the versions on the local machine. If one or more versions do not match, then Dbinit downloads information about available upgrade kits. Dbinit then searches for upgrade kits to apply and downloads the upgrades kits to the local inbox directory.
Download extract snapshot file. Dbinit downloads the database extract snapshot file to the local inbox directory.
Create driver file. Dbinit creates an upgrade wizard driver file to apply the upgrade kits to the local machine and create the local database using the database extract snapshot file.
Run upgrade wizard. Dbinit invokes the upgrade wizard to apply the upgrade kits and initialize the local database.

If the initialization is successful, the upgrade wizard then restarts the calling program.

### Automatic Initialization from the client

When a mobile user runs the client against the local database, the client checks whether the local database file exists. If the local database does not exist, the client prompts the user whether he wants to initialize a local database. If so, the Client invokes Dbinit to create the local database and also ensure that all software components are up-to-date.

### Version Checking

At the beginning of each synchronization session, the docking client checks whether a database extract or a database schema upgrade is pending. This is because the docking client must perform a schema version check at the start of the docking session because the docking client must know whether it can upload transactions to the server database or must discard the transactions. The docking client also must know whether it must perform a dbinit to re-initialize the local database.

After the docking client connects to the docking server, the docking client asks docking server for the server database schema versions. There are three possible outcomes:

Major Schema Change. If the major and minor schema versions of the local database and the server database do not match, then a database re-initialization is "required". A change in the major or minor schema versions implies that the server database has undergone a major schema change. The docking client discards all pending transactions to upload. The docking client informs the mobile user and invokes the upgrade wizard to initialize the local database and upgrade software components (if any). If a database extract is not available, then the docking client displays an error asking the mobile user to contact the upgrader, e.g., the database administrator, to re-extract the docking client. Pending Dbinit, if there is no major schema change and the upgrader, e.g., the database administrator, has re-extracted the docking client, then the docking client must re-initialize the local database. The docking client saves all pending transactions to upload in a file in the inbox directory called dbinit.dx. The docking client invokes the upgrade wizard to create the new local database and upgrade any new software components. After initializing the local database, the upgrade wizard invokes a data merge utility (dmutl.exe) to apply the saved pending transactions in dbinit.dx to the local database. Dmutl.exe applies the transactions to the local database and logs new transactions to upload to the server database, as if the mobile user has re-entered all the transactions.

Minor Schema Change. If there is no major schema change and no pending dbinit, then the docking client proceeds to synchronize the docking client. Eventually, the docking client applies a transaction to upgrade the required versions of the Schema software component. This update triggers the docking client to perform a version check and eventually causes the upgrade wizard to apply an upgrade kit to upgrade the local database.

### Initialize a Regional Database

The upgrader, e.g., the database administrator, on the regional database runs a standalone database initialization program to initialize a regional database. The program connects to the Remote server and downloads the database extract archive file from outbox directory. The program then invokes the upgrade wizard to initialize the regional database.

### Replace a Regional Database

If the upgrader, e.g., the database administrator, on the HQ server runs a database extract for an existing regional database, the upgrader on the regional database needs to re-initialize the regional database. At the beginning of the each synchronization session, a Replication Agent checks whether a database extract archive file is pending for the regional database. If so, the Replication Agent notifies the upgrader and shuts down. The upgrader must manually invoke the standalone database initialization program to initialize a regional database.

The Schema upgrade kit consists of one or more of the following items:
DDL file to make schema changes
DAT files to install seed data
Repimexp files to install Repository
SQL scripts to perform special upgrade steps, convert data, and the like
SQL script to update version numbers held in an S_APP_VER table
Files to update software components. This includes adding, deleting and updating software component information. At the minimum, the file must update required versions of the components (e.g. you must use the new version of Tools against the new schema).
Files to install upgrade kits that define. For example, upgrade kits to install a new version of Tools, Server and the like.

### Installing the Schema at Customer Sites

The upgrader, e.g., the database administrator, receives the CD or other media, and applies the upgrade kit to the test/configuration database. Before applying the upgrade kit, the upgrader first shuts down all programs, both connected users and Server instances. Then he or she runs the upgrade wizard to apply the upgrade kit to the test database

The upgrade kit performs the following steps:
Makes schema changes
Imports seed data
Runs repimexp.exe to import the new Repository
Runs SQL scripts to perform special upgrade steps, convert data, and the like.
Updates the version numbers.
Runs files to update the software component tables.
Runs files to install - defined upgrade kits.

### Accessing the Database after an Upgrade

At this point, the test/configuration database has the new schema and the software component required versions are set to the new versions. Any program that connects to the server database needs to apply one or more upgrade kits to get to the new required versions. For example, when the upgrader, e.g., the database administrator, logs in to the server database, the software used to login should detect a version mismatch and attempt to upgrade or call the upgrader. The upgrader has two options to upgrade to the new Tools version; if an upgrade kit is available, download the upgrade kit and apply it to the local machine.

Install the new version from the CD-ROM. Then, use the version against the server database. The upgrader, e.g., the database administrator, must use this option if this is the first time they installed software on the local machine.

If the upgrader, e.g., the database administrator, wants to let programs perform upgrades, he or she can register upgrade kits to upgrade the various software components. Otherwise, he or she can manually upgrade each machine by installing from the CD-ROM.

### Customizing and Testing

The upgrader, e.g., the database administrator, can customize local installations in these three ways:
Database extensions such as new extension tables, extension columns or indexes. Configuration changes such as new CDF files, CFG files or report files.
Third party software changes such as new versions of Microsoft Word, Adobe Acrobat and the like.

Customers follow a well-defined procedure for creating and distributing these kinds of customizations. All of these customizations do not cause a major schema change; hence, they do not require a database re-extract.

Step 1: Make the configuration changes on the server database. The upgrader, e.g., the database administrator, uses programs to customize end-user installations for their site, and merge the customer's repository with a new repository.

To effect configuration changes during the version or schema upgrade, new .CDF files need to be generated. This is done using an editor to customize CFG files, and a DBMS program such as Microsoft Access to customize reports. Microsoft Help Editor or the like may be used to customize the Help files

Programs in the upgrade kit compare versions and automatically detect the need to apply an upgrade the next time they start up. The system embodying our invention upgrades connected users. In a similar way, the server upgrades application servers, or, when present, a docking client upgrades local databases. A Replication agent upgrades regional databases.

The system downloads the required upgrade kits and applies the upgrade to the local machine. If the database upgrade changed the major or minor schema versions, the upgrade system, automatically re-initializes the mobile or regional database.

A further aspect of our system is the automatic setting of the required versions of software components. Alternatively, the upgrader, e.g., the database administrator, can update the required versions and initiate upgrades of one or more software components. In a networked environment the upgrader should be very careful when making changes to the listing of required versions because updates to this file can cause programs at all locations to inyoke-upgrades.

In most cases, the application server is self-upgrading. That is, the upgrader, e.g., the database administrator, does not need to intervene to detect and apply an upgrade. However, there are exceptions. If the upgrade kit requires user intervention, then the upgrade software should wait until the upgrader provides input.

Similarly, if a database extract is pending, for example, for a regional database, the server must shutdown all access to the regional database, ensure that the transaction merger has successfully merged all pending .dx files from mobile clients, and initiate a database initialization process to re-initialize the regional database.

The software upgrade programs of the preferred embodiment of the invention automatically detect and apply upgrades as needed to maintain the correct software component versions on all machines. Users do not need to manually search for and apply upgrades. This is especially true of users connected on a LAN or WAN, who experience painless upgrades. The client automatically detects and applies upgrades as needed. If an upgrade is detected, the client notifies the user of the software components to upgrade, encourages the user to apply the upgrade and prompts the user to start the upgrade. The system automatically downloads the appropriate upgrade kits to the local disk if the upgrade kit does not already exist on the local disk.

After the upgrade kit is available on the local machine, the client invokes the upgrade wizard to apply the upgrade. The upgrade wizard displays the upgrade kit items prompts the user to start the upgrade. The upgrade wizard starts processing the and upgrade kit items and regularly informs the user of the progress. When the upgrade wizard is complete it restarts the original program.

Mobile users also experience painless upgrades. Mobile users do not need to explicitly invoke database initialization. Attempting to start the Client against the local database with no local database available automatically invokes database initialization to create the local database. Dbinit also ensures that all software components are up-to-date on the local machine.

Mobile users can download upgrade kits earlier than necessary by navigating to the Upgrade Kit screen and requesting to download the upgrade kit archive file in the next synchronization session.

The upgrade software performs a version check at the start of each synchronization session. If an upgrade is detected, the client notifies the user of the software components to upgrade, encourages the user to apply the upgrade and prompts the user to start the upgrade, and automatically downloads the appropriate upgrade kits to the local disk if the upgrade kit does not already exist on the local disk.

After the upgrade kit is available on the local machine, the client invokes the upgrade wizard to apply the upgrade. The upgrade wizard displays the upgrade kit items and prompts the user to start the upgrade. The upgrade wizard starts processing the upgrade kit items and regularly informs the user of the progress. When the upgrade wizard is complete, it restarts the original program.

If a re-initialization is required, the docking client invokes Dbinit to reinitialize the local database.

In one embodiment of our invention a component screen lets the upgrader, e.g., database administrator, define software components and specify the required versions for software components. This screen also lets upgrader specify dependencies between software components. For example, the client software component requires that the Schema component is already installed before the client can start up.

The component screen has two applets: a software component applet which defines the name and required versions for a software component, and a required software component applet, which defines the list of other software components required to use the current software component. This applet is a child of the software component applet.

The Software Component applet lets the upgrader, e.g., the database administrator, enter the attributes of a software component. It can have one or more of the following fields:
Name (required). The name of the software component.
Comments (optional). The description of the software component.
Minimum version (optional). The minimum version that must be installed on a machine to use this software component. If NULL, then the software component does not have a minimum version
Maximum version (optional). The maximum version that must be installed on a machine to use the software component. If NULL, then the software component does not have a maximum version. The applet verifies that the minimum version is less than or equal to the maximum version.
Locate method (optional). The method to use to get the install location of the software component. This is a picklist.
Locate Info (optional). Additional information for the locate method.
Version method (optional). Method to get the currently installed version of software component. This is a picklist.
Version Info (optional). Additional information for the version method.

The Software Component applet lets the upgrader, e. g., the database administrator, define required software components for a software component. This applet has the following fields:
Required software component (required). The name of the required software component.
Comments (optional).
Start up flag (required). Specifies whether the required software component is required to start up the software component. Some required software components are used by a software component but not required for start up. For example, the client requires Microsoft Word if the user uses Correspondence but Microsoft Word is not required when starting up the client.

Upgrade Kit Item Arguments screen.

It is possible to use this screen to define the list of valid arguments for each upgrade kit item type. This screen has one applet:

Upgrade Kit Item Type Arguments applet.

This applet lets the upgrader, e.g., the database administrator, enter the valid arguments for an upgrade kit item type. This applet has the following fields:
Item type (required). The type of upgrade kit item to apply. The valid types of upgrade kit items and their respective arguments constitute a picklist.
Sequence (required). An integer denoting the sequence that upgrade wizard passes the argument to apply the upgrade kit item.
Required Flag (required). Specifies whether the argument is required.
Comments (optional). The description of the upgrade kit item type argument.
Default value (optional). Default value of the argument.

### Upgrade Kit applet

This applet lets the upgrader, e.g., the database administrator, enter the attributes of an upgrade kit. This applet has the following fields:
Name (required). The name of the upgrade kit.
Title (required). The user-friendly name of the upgrade kit. The upgrade wizard displays this string on the title bar of the upgrade wizard dialog box. This value defaults to the name of the upgrade kit.
Comments (optional). The description of the upgrade kit. The upgrade wizard displays this description when the upgrade wizard starts up.
Status (required). The current status of the upgrade kit. The status is set 'Pending' when defining the upgrade kit. After the upgrader, e.g., the database administrator, presses the "Release" button, then the status changes to 'Active'. The status changes to 'Inactive' if the upgrader changes the status, e.g. chooses the delete record action on the upgrade kit.
Upgrade kit archive file (optional). The attributes for the attached upgrade kit archive file. These are the attributes used by the file attachment business component and frames. Mobile users can navigate to this applet and request that Remote download the upgrade kit archive in the next synchronization session.

After the upgrader, e.g., the database administrator, "releases" the upgrade kit, any mobile or connected user can download and apply the upgrade kit to the local machine. The user navigates this applet and double clicks on an upgrade kit. If the upgrade kit archive file is not accessible on the local machine (i.e. mobile user), then the applet asks the user whether they want to submit a request to download the upgrade kit archive file in the next synchronization session. If the upgrade kit is already accessible on the local machine, then the applet invokes the upgrade wizard to apply the upgrade kit to the local machine. The upgrade wizard waits for the client to exit before starting the upgrade.

Upgrade Kit Items applet. This applet lets the upgrader, e.g., the database administrator, enter the items for the upgrade kit. This applet has the following fields:
Sequence (required). An integer denoting the sequence in which to execute the upgrade kit items.
Title (required). The user-friendly title of the upgrade kit item. The upgrade wizard displays this string on the list of items to perform in the upgrade.
Comments (optional). The description of the upgrade kit item. The upgrade wizard displays this description when the user highlights the upgrade kit item.
Disk Space Estimate (optional). The amount of disk space required to apply upgrade kit item to a machine. The upgrader, e.g., the database administrator, provides this estimate. If the estimate is NULL, then the upgrade wizard makes a disk space estimate based on some predefined rules.
Item type (required). The type of upgrade kit item to apply.

The Upgrade Kit Item Arguments applet lets the upgrader, e.g., the database administrator, enter arguments for an upgrade kit item. The list of valid arguments for each upgrade kit item type is stored in an S_UPG_ITARG table. This applet creates intersection records between upgrade kit items and upgrade kit type arguments. This applet has the following fields:
Name (required). The name of the argument.
Comments (optional). The description of the upgrade kit item. The upgrade wizard displays this description when the user highlights the upgrade kit item.
Argument value (required).
File attributes (optional). The attributes for files attached to the upgrade kit argument. The upgrader, e.g., the database administrator, attaches files to the upgrade kit item.

The Upgrade Kit Components applet lets the upgrader, e.g., the database administrator, define which software components are required for this upgrade. For example, you can not install version 3.1.2 on a machine unless you have version 3.1.0 or higher already, installed on that particular local machine. This applet also lets the upgrader specify the software components that the upgrade kit affects.

This applet has the following fields:
Software Component (required). The software component that is affected by this upgrade kit.
Minimum Installed Version (optional). This field stores the minimum version of the software component required to install this upgrade kit. This field can be left NULL if the upgrade kit does not require this software component.
Maximum Installed Version (optional). This field stores the maximum version of the software component required to install this upgrade kit. This field can be left NULL if the upgrade kit does not require this software component.
New Installed Version (optional). This field stores the new version of the software component if this upgrade kit is applied to a machine. This field can be left NULL if the upgrade kit does not install a new version of the software component.

The dialog in this applet verifies that the minimum version is less than or equal to the maximum version. It also verifies that the new version is greater or equal to the maximum version.

The Upgrade Kit Wizard includes a set of pre-defined dialogs to assist the upgrader, e.g., the database administrator, in creating upgrade kits that customers need most often. It may contain one or more of the following elements:
Screen 1: Choose Upgrade Kit Type
   Database extension. Create an upgrade kit to apply the database extensions. The upgrade kit consists of two upgrade kit items: a DDL file to apply database schema changes and a DAT file to distribute the Repository data file to remote databases. The Repository data file contains a subset of repository tables needed to initialize the dictionary common api.
   CDF files. Create an upgrade kit to distribute the new CDF files to all users.
   Report files. Create an upgrade kit to distribute the new Report files to all users. Help files. Create an upgrade kit to distribute the new Help files to all users.
   Sample Database. Create an upgrade kit to distribute the new Sample Database to all users.
   Third Party Software. Create an upgrade kit to distribute the third party software to all users.
Screen 2: Full or Patch Install
   Full install.
   Patch install.
Screen 3: Version Information
   Enter minimum required version: For full installs, defaults to NULL.
   Enter maximum required version: For full installs, defaults to NULL.
   Enter new version: defaults to software component's current maximum version +1.
   The dialog verifies that the minimum version is less than or equal to the maximum version. It also verifies that the new version is greater or equal to the maximum version.
Screen 4: Files
   Enter the source files: For full installs, select a directory that contains the files for the upgrade kit. The Upgrade Kit Wizard adds all the files in the directory and sub-directories to the upgrade kit.
   For patch installs, select one or more files to add to the upgrade kit.
   Enter the destination directory for the files.
Screen 5: Confirm
   Review the information for the new upgrade kit and press OK to create the new upgrade kit. Otherwise, press Cancel to abort.

A major component of the system embodying our invention is the upgrade wizard. The primary function of the upgrade wizard is to apply upgrade kits. In a preferred embodiment of our invention the upgrade wizard has very simple user interface. When the upgrade wizard first starts up, it displays the title and description of the upgrade kit to the user. After the user presses the OK or other similar button, the upgrade wizard then displays a list of upgrade kit items to the user. The upgrade wizard displays the title of the upgrade kit item. When the user highlights a specific upgrade kit item, the upgrade wizard also displays the description of the chosen item in the bottom frame.

After the user reviews the upgrade kit items and presses the START or other similar button, the upgrade wizard performs each of the upgrade kit items in order. A bar indicator may show an estimate of the progress of the upgrade. The upgrade wizard may also highlight the upgrade kit item after the item is completed.

### Algorithms and Procedures

Version Checking Function. To check a software component's version, the upgrade wizard gets the required versions from the database and the actual versions from the software component itself. To determine which components need checking, the upgrade wizard starts from the base component and walks through the required component network to get a list of the required components.

The upgrade wizard programs call a function to do the version checking. The caller passes the "compiled" component information. The function returns a list of software components that are out-of-date and the current and required versions for each out-of-date software component.

The function must check the version for each software component listed in the "compiled" component information. First, the function must locate the component. Once located, the function can check the version of the component and the function can determine if the component can be upgraded. The CDF file stores a version number in the CDF file. The Upgrade Kit Wizard writes the value to the CDF file.

The CFG files add a new version attribute. The Upgrade Kit Wizard writes the value to the CFG file.

Determining Which Upgrade to Run. The upgrade kit component table stores component and version information for an upgrade kit. This table describes which components an upgrade kit installs and which components are required by the upgrade. Detecting which upgrade kits to apply may be non-trivial.

The preferred system embodying our invention uses a recursive algorithm to search for the necessary upgrade kits. The algorithm is as follows:
If current_versions=desired_versions
   Call callback with current upgrade list
   Return TRUE;
If upgrade list is full
   Return TRUE;
For each upgrade
Do
   If upgrade already in upgrade list
      Continue;
         If upgrade can't be run now (i.e. upgrade_required_versions != current-versions)
   Continue;
      Add upgrade to the list
      Apply upgrade information to current_versions
      Recurse
      Remove upgrade from the list
      Remove upgrade information from current_versions Done
   Return TRUE;

This algorithm produces a list of upgrade kits to get from the current installed version to the required version. If there is more than one path, the function selects the path with the fewest upgrade kits.

Upgrade wizard. The upgrade wizard is a simple, standalone program whose sole function is to apply upgrade kits to a local machine. The upgrade wizard does not connect to or require the Database to run. The upgrade wizard reads all parameters and stores state information in simple files. The upgrade wizard need not be capable of merging transactions. The upgrade wizard can perform the implementation portion of Dbinit (though not the transfer portion).

Running the upgrade wizard. The upgrade wizard reads two types of files: a state file and an upgrade driver file. Both file types are human readable so support personnel can "fix" the files if needed.
State file. The state file contains a list of upgrades that need to be run and the state of the upgrade. The state file is empty if there are no upgrades pending or in-progress. The client and Server programs check the state file during start-up. If the state file is not empty, they invoke the upgrade wizard to resume the upgrade.
Driver file. The upgrade driver contains a list of upgrade kit items that need to be performed for the upgrade.

At start up, the upgrade wizard reads the driver file and verifies that there is sufficient disk space to apply the upgrade. The upgrade wizard uses the disk space estimate supplied for each upgrade kit item. If the upgrader, e.g., the database administrator, does not provide an estimate, the upgrade wizard estimates the disk space using some Dun algorithm. The upgrade wizard notifies the user if there is insufficient disk space on local machine to apply the upgrade kits.

The upgrade wizard then reads the state file. If the state file is not empty, the upgrade wizard first rolls back all changes by running the completed upgrade kit items in reverse order.

The upgrade wizard estimates the time to apply the upgrade kits to the local machine and waits for the user to start the upgrade. The upgrade wizard updates the status file as it processes actions. It flushes the changes to disk. The upgrade wizard saves data to a backup directory before performing each action. For example, prior to executing any database related actions, the upgrade wizard backs up the local database.

When the upgrade completes successfully, the upgrade wizard deletes all backup files. It also deletes the upgrade status file is deleted.

Upgrading the upgrade wizard. The upgrade wizard has no dependencies on any other program. It does not load CFG files or DLLs. To support upgrading the upgrade wizard itself, programs that invoke the upgrade wizard follows these steps:
Check if a "ready" version of the upgrade wizard executable exists.
   If a "ready" version exists, delete the existing upgrade wizard executable and rename the "ready" version to current upgrade wizard executable.
   If a upgrade wizard executable does not exist, rename the source upgrade wizard to the upgrade wizard executable.
   The upgrade wizard renames the source upgrade wizard to the ready upgrade wizard when it finishes an upgrade. Preferably this happens when the upgrade status file is empty which will let the user change the format of the status file. Alternatively, this can be done immediately after an upgrade which has produced an upgraded upgrade wizard executable so that the next upgrade can take advantage of new upgrade wizard features and presumably new upgrade wizard driver file syntax.

This algorithm ensures that the same upgrade wizard is be used throughout the upgrade, even if it is restarted after installing a new version of the upgrade wizard.

Invoking the Version Checking Function. Each program calls the version checking function at pre-defined times.
Client
   At startup, perform a version check for client. The client reads the required versions from an S_UPG_COMP table's "compiled" LONG column and passes the information to the version checking function.
Server
   At startup, the Server starts a new server component - Server Version Checker-to perform the version check. The Server Version Checker reads the required versions for the Server component from the S_UPG_COMP table's "compiled" LONG column and passes the information to the version checking function.
Docking Client and Replication Agent
   At the start of each synchronization session, the docking client (or replication agent) gets the schema version of the server database via a DRL message. The docking server reads the server database S_APP_VER table and sends the server database schema version to the docking client. If the major schema version on the server database and local database are different or a dbinit is pending, then the docking client invokes Dbinit to reinitialize the database.
   Data Merge watches for transactions that update the "compiled" LONG column in S_UPG_COMP. For the docking client, Data Merge watches for changes to the "Client" component. For the Replication Agent, Data Merge watches for changes to the "Server" component.
As soon as Data Merge applies a transaction on this column for the "watched" component, Data Merge commits and stops merging transactions. The docking client then performs a version check. The Replication Agent starts the Server Version Checker to perform the version checks. If one or more required versions do not match, then the docking client (or Server Version Checker) finds one or more upgrade kits to apply, downloads the upgrade kit archive files (if not already accessible on the local disk) and invokes the upgrade wizard to apply the upgrade.

Dictionary Cache File. The dictionary cache file (i.e. the subset of the Repository needed by server programs and the docking client) provides a "cache" file which is programmed to load the dictionary into memory. Using a "cache" file eliminates the need to load the dictionary data into all remote databases, reduces the size of the remote databases and also reduces the time to initialize or upgrade remote databases. It is possible to use an existing diccache.dat mechanism for the "cache" file. The diccache.dat file contains a file representation dictionary. In operation, a version number is stored in the diccache.dat file to identify its version and add new methods for reading the version number from the diccache.dat file. The file is typically in the <_ROOT>\bin directory.

While our invention has been described with respect to certain preferred embodiments and exemplifications, it is not intended to limit the scope of the invention thereby.

## Claims

1. A method for a server computer to distribute and install software upgrades on client computers, comprising:
under control of the server computer,
defining contents of software version upgrade kits of software installed on client computers, the software version upgrade kits each being self-contained and comprising files, actions, and an upgrade wizard to upgrade a software component from one version to another version;
writing the contents of the software version upgrade kits to a database on the server computer as a table of contents, the table of contents showing for each of the upgrade kits the contents of that upgrade kit and any software components required for an upgrade using that upgrade kit; and
for each of multiple client computers,
comparing the table of contents of the software version upgrade kits to software installed on that client computer to determine one or more software version upgrade kits that will each effect an upgrade on that client computer from a version of a software component currently installed on that client computer to an updated software component version; and
building copies of the determined software upgrade kits for that client computer from the table of contents; and
under control of each of the multiple client computers,
determining whether software components for a program that is currently running on that client computer are up-to-date; and
when one or more software components of the program are not up-to-date,
interrogating other installed software components on that client computer to determine the versions of those not-up-to-date software components that arc installed on that client computer;
notifying the server computer of the determined installed versions of the not-up-to-date software components on that client computer;
downloading copies of software upgrade kits built on the server computer for that client computer to upgrade the not-up-to-date software components;
for each of the downloaded software upgrade kits, invoking the upgrade wizard for that software upgrade kit on that client computer to upgrade one of the not-up-to-date software components on that client computer, the upgrade wizard verifies there is sufficient disk space available on the client to apply the upgrade, the upgrade wizard performing the software component upgrade by performing the actions of the upgrade kit and using the files of the upgrade kit, the upgrade wizard keeping track of the upgrade's progress and, if an error is detected during the upgrade, automatically rolling back the changes by running the actions of the upgrade kit in reverse order and restoring the client computer to a pre-upgrade state: and
after the upgrading of the not-up-to-date software components, restarting execution of the program so as to use the upgraded software components.

2. The method of claim 1 including:
before the performing of an upgrade of a software component, creating a backup of local files;
tracking progress of the performing of the upgrade;
rolling back changes made during the performing after an error occurs;
instantiating the local file backup; and
restarting the upgrade from a save point.

3. The method of claim 1 comprising monitoring progress of the performing of an upgrade of a software component on a client from a server.

4. The method of claim 1 including downloading one or more upgrade kits for software components to a client computer before the upgrade of the software component is required on the client computer.

5. The method of claim 1 wherein the currently running program on the multiple client computers is database management software, and wherein the upgraded software components include database schemas.

## Patentansprüche

1. Verfahren für einen Servercomputer zum Verbreiten und Installieren von Software-Upgrades auf Client-Computern, das Folgendes umfasst:
unter der Kontrolle des Servercomputers:
Definieren des Inhalts von Softwareversions-Aktualisierungssätzen von in Client-Computern installierter Software, wobei die Softwareversions-Aktualisierungssätze jeweils in sich geschlossen sind und Dateien, Aktionen und einen Upgrade-Wizard zum Aktualisieren einer Softwarekomponente von einer Version auf eine andere Version umfassen;
Schreiben des Inhalts der Softwareversions-Aktualisierungssätze in eine Datenbank im Servercomputer als ein Inhaltsverzeichnis, wobei das Inhaltsverzeichnis für jeden der Aktualisierungssätze den Inhalt dieses Aktualisierungssatzes und jedwede für eine Aktualisierung mithilfe dieses Aktualisierungssatzes erforderliche Softwarekomponente zeigt; und
für jeden von mehreren Client-Computern
Vergleichen des Inhaltsverzeichnisses der Softwareversions-Aktualisierungssätze mit auf diesem Client-Computer installierter Software, um einen oder mehrere Softwareversions-Aktualisierungssätze zu ermitteln, die jeweils eine Aktualisierung auf diesem Client-Computer von einer Version einer auf diesem Client-Computer aktuell installierten Softwarekomponente auf eine aktualisierte Softwarekomponentenversion bewirken; und
Herstellen von Kopien der ermittelten Software-Aktualisierungssätze für diesen Client-Computer aus dem Inhaltsverzeichnis und,
unter der Kontrolle jedes der mehreren Client-Computer,
Ermitteln, ob Softwarekomponenten für ein Programm, das aktuell auf diesem Client-Computer läuft, auf dem neuesten Stand ist, und
wenn eine oder mehrere Softwarekomponenten nicht auf dem neuesten Stand sind,
Abfragen anderer installierter Softwarekomponenten auf diesem Client-Computer, um die Versionen jener nicht auf dem neuesten Stand befindlicher Softwarekomponenten, die auf diesem Client-Computer installiert sind, zu ermitteln;
Benachrichtigen des Server-Computers über die ermittelten installierten Versionen der nicht auf dem neuesten Stand befindlichen Softwarekomponenten auf diesem Client-Computer;
Herunterladen von Kopien der auf dem Server-Computer für diesen Client-Computer hergestellten Software-Aktualisierungssätze zum Aktualisieren der nicht auf dem neuesten Stand befindlichen Softwarekomponenten;
Aufrufen, für jeden der heruntergeladenen Software-Aktualisierungssätze, des Upgrade-Wizards für diesen Software-Aktualisierungssatz auf diesem Client-Computer, um eine der nicht auf dem neuesten Stand befindlichen Softwarekomponenten auf diesem Client-Computer zu aktualisieren, wobei der Upgrade-Wizard verifiziert, dass ausreichend Festplattenspeicher auf dem Client verfügbar ist, um die Aktualisierung anzuwenden, der Upgrade-Wizard die Softwarekomponentenaktualisierung durch Durchführen der Aktionen des Aktualisierungssatzes und unter Verwendung der Dateien des Aktualisierungssatzes durchführt, der Upgrade-Wizard den Fortschritt der Aktualisierung verfolgt und, wenn während des Aktualisierens ein Fehler festgestellt wird, die Änderungen automatisch rückgängig gemacht werden, indem die Aktionen des Aktualisierungssatzes in umgekehrter Reihenfolge abgearbeitet werden und der Client-Computer wieder in einen Zustand vor der Aktualisierung versetzt wird, und
nach dem Aktualisieren der nicht auf dem neuesten Stand befindlichen Softwarekomponenten Neustarten der Ausführung des Programms, um die aktualisierten Softwarekomponenten zu verwenden.

2. Verfahren nach Anspruch 1, das Folgendes umfasst:
vor dem Durchführen einer Aktualisierung einer Softwarekomponente das Erstellen einer Sicherung lokaler Dateien;
Verfolgen des Fortschritts der Durchführung der Aktualisierung;
Rückgängigmachen von während der Durchführung gemachten Änderungen, nachdem ein Fehler aufgetreten ist;
Einleiten der Sicherung lokaler Dateien und
Neustarten des Upgrades von einem Sicherungspunkt.

3. Verfahren nach Anspruch 1, das das Überwachen des Fortschritts der Durchführung einer Aktualisierung einer Softwarekomponente auf einem Client von einem Server umfasst.

4. Verfahren nach Anspruch 1, das das Herunterladen von einem oder mehreren Aktualisierungssätzen für Softwarekomponenten auf einem Client-Computer aufweist, bevor die Aktualisierung der Softwarekomponente auf dem Client-Computer benötigt wird.

5. Verfahren nach Anspruch 1, bei dem das aktuell laufende Programm auf den mehreren Client-Computern Datenbankmanagement-Software ist und wobei die aktualisierten Softwarekomponenten Datenbankschemata aufweisen.

## Revendications

1. Procédé pour serveur informatique servant à distribuer et installer des mises à niveau logicielles sur des ordinateurs clients, comprenant :
sous la commande du serveur informatique,
la définition de contenus de kits de mise à niveau de version logicielle du logiciel installé sur les ordinateurs clients, les kits de mise à niveau de version logicielle étant chacun autonome et comprenant des fichiers, des actions et un assistant de mise à niveau pour mettre à niveau un composant logiciel d'une version à une autre version ;
l'écriture du contenu des kits de mise à niveau de version logicielle dans une base de données sur le serveur informatique sous forme de table de contenus, la table de contenus montrant pour chacun des kits de mise à niveau le contenu de ce kit de mise à niveau et tous composants logiciels requis pour une mise à niveau au moyen de ce kit de mise à niveau ; et
pour chacun des multiples ordinateurs clients,
la comparaison de la table de contenus des kits de mise à niveau de version logicielle au logiciel installé sur cet ordinateur client afin de déterminer un ou plusieurs kits de mise à niveau de version logicielle qui effectueront chacun une mise à niveau sur cet ordinateur client d'une version d'un composant logiciel présentement installé sur cet ordinateur client à une version mise à jour du composant logiciel ; et
l'élaboration de copies des kits de mise à niveau logicielle pour cet ordinateur client à partir de la table de contenus ; et
sous la commande de chacun des multiples ordinateurs clients,
la détermination si des composants logiciels d'un programme présentement exécuté sur cet ordinateur client sont à jour ou non ; et
quand un ou plusieurs composants logiciels du programme ne sont pas à jour,
l'interrogation d'autres composants logiciels installés sur cet ordinateur client afin de déterminer les versions de ces composants logiciels non à jour qui sont installés sur cet ordinateur client ;
la notification au serveur informatique des versions installées déterminées des composants logiciels non à jour sur cet ordinateur client ;
le téléchargement de copies de kits de mise à niveau logicielle élaborés sur le serveur informatique pour cet ordinateur client afin de mettre à jours les composants logiciels non à jour ;
pour chacun des kits de mise à niveau logicielle téléchargés, l'appel de l'assistant de mise à jour pour ce kit de mise à niveau logicielle sur cet ordinateur client afin de mettre à niveau l'un des composants logiciels non à jour sur cet ordinateur client, l'assistant de mise à niveau vérifiant que l'espace disque est suffisant sur le client pour appliquer la mise à niveau, l'assistant de mise à niveau exécutant la mise à niveau du composant logiciel en exécutant les actions du kit de mise à niveau et en utilisant les fichiers du kit de mise à niveau, l'assistant de mise à niveau suivant la progression de la mise à niveau, et en cas d'erreur détectée durant la mise à niveau, annulant automatiquement les changements en exécutant dans le sens inverse les actions du kit de mise à niveau et en rétablissant l'ordinateur client sur un état pré-mise à niveau ; et
après la mise à niveau des composants logiciels non à jour, le redémarrage du programme de façon à utiliser les composants logiciels mis à niveau.

2. Procédé selon la revendication 1, comportant :
avant l'exécution d'une mise à niveau d'un composant logiciel, la création d'une sauvegarde des fichiers locaux ;
le suivi de la progression de l'exécution de la mise à niveau ;
l'annulation des changements effectués durant l'exécution après l'occurrence d'une erreur ;
l'instanciation de la sauvegarde des fichiers locaux ; et
le redémarrage de la mise à niveau à partir d'un point de sauvegarde.

3. Procédé selon la revendication 1, comprenant le contrôle de la progression de l'exécution d'une mise à niveau d'un composant logiciel sur un client depuis un serveur.

4. Procédé selon la revendication 1, comportant le téléchargement d'un ou de plusieurs kits de mise à niveau de composants logiciels d'un ordinateur client avant que la mise à niveau du composant logiciel s'impose sur l'ordinateur client.

5. Procédé selon la revendication 1, dans lequel le programme présentement exécuté sur les multiples ordinateurs clients est un logiciel de gestion de base de données, et dans lequel les composants logiciels mis à niveau comportent des schémas de base de données.
